# EUROPÄISCHE PATENTSCHRIFT

(11) **EP 1 832 479 B1**
(45) Veröffentlichungstag und Bekanntmachung des Hinweises auf die Patenterteilung: **22.10.2008**
(21) Anmeldenummer: 07100652.2
(22) Anmeldetag: 17.01.2007
(51) Int. Cl.: B60R 21/34, B60R 21/0136

(54) **Verfahren und Vorrichtung zum Steuern eines Personenschutzsystems**
Method and device for controlling a human protection system
Procédé et dispositif destinés à la commande d'un système de protection de personnes

(30) Priorität: 07.03.2006 DE 102006010477
(43) Veröffentlichungstag der Anmeldung: 12.09.2007
(73) Patentinhaber: ROBERT BOSCH GMBH, 70442 Stuttgart (DE)
(72) Erfinder: Mack, Frank, Seoul (KR)

(56) Entgegenhaltungen:
- WO-A-01/98117
- DE-A1- 10 045 698
- DE-C1- 10 132 681
- GB-A- 2 386 873

## Beschreibung

### Stand der Technik

Die vorliegende Erfindung betrifft ein Verfahren und eine Vorrichtung zum Steuern eines Personenschutzsystems, insbesondere eines Personenschutzsystems für Fußgänger.

Bei einem Zusammenprall eines Fahrzeuges mit einem Fußgänger kann letzterer bereits trotz geringer Geschwindigkeiten des Fahrzeuges schwere Verletzungen erleiden. Die Europäische Union hat daher Richtlinien erlassen, die die Hersteller von Kraftfahrzeugen anweist, ihre Kraftfahrzeuge derart zu konstruieren, dass das Verletzungsrisiko für einen Fußgänger verringert wird. Die Hersteller verfolgen hierzu zwei Lösungsstrategien. Eine erste Strategie sieht eine Änderung der Karosserie vor, um Knautschzonen für den Fußgänger zu schaffen. Hierbei wird u. a. die Frontfläche und insbesondere die Stoßstange in ihrer Anordnung und Aufbau angepasst. Die zweite Strategie sieht vor, den Fußgänger durch aktive Personenschutzeinrichtungen, z.B. Außen-Airbags oder ein Anheben der Motorhaube vor einem Auftreffen auf die A-Säule bzw. den Motorblock aufzufangen.

Für die zweite Strategie sind geeignete Sensoren notwendig, die einen Aufprall eines Fußgängers auf das Fahrzeug erkennen. Hierzu können verschiedene Sensorprinzipien verwendet werden, u. a. Beschleunigungs-, Druck-, Klopf-, piezoelektrische und/oder optische Sensoren.

Viele der aktiven Personenschutzvorrichtungen, wie z.B. der Außen-Airbag, sind nur einmalig verwendbar. Danach müssen sie ausgetauscht werden, wodurch sich erhebliche Kosten für den Fahrzeughalter ergeben. Daher sollte die Sensorauswertung einen Zusammenstoß mit einem Fußgänger sicher von anderen Zusammenstößen unterscheiden können.

Der Impulsübertrag von einem Fußgänger auf das Fahrzeug kann aus der Geschwindigkeit des Fahrzeuges und dem typischen Körpergewicht von Personen geschätzt werden. Aus den Signalen der Beschleunigungssensoren wird daher zweckmäßigerweise der Impulsübertrag bestimmt. Liegt der Impulsübertrag innerhalb eines typischen Bereichs für einen Fußgänger, wird das Personenschutzsystem ausgelöst.

Der typische Bereich des Impulsübertrags wird u. a. durch die typische Masse des Fußgängers und die Fahrzeuggeschwindigkeit festgelegt. Hierbei wird angenommen, dass der Fußgänger keine Eigengeschwindigkeit oder nur eine vernachlässigbar geringe Eigengeschwindigkeit von wenigen Kilometern pro Stunde hat. Ein fliegender Fußball mit einer erheblichen Eigengeschwindigkeit von z.B. 55 km/h könnte allerdings ebenfalls zu einem Impulsübertrag führen, der dem eines Fußgängers entspricht. Daher kann durch einen solchen Fußball fehlerhafterweise das Personenschutzsystem ausgelöst werden.

Aus der gattungsgemäßen WO 01/98117 A1 ist es bekannt, dass bei einem Fußgängerschutzsystem Beschleunigungssignale erfasst werden und bei der Ansteuerung von Fußgängerschutzmitteln berücksichtigt werden.

### Offenbarung der Erfindung

Ein Vorteil des erfindungsgemäßen Verfahrens mit den Merkmalen des Anspruchs 1 und der Vorrichtung mit den Merkmalen des Anspruchs 10 liegt darin, dass ein Aufprall von einem Objekt mit Eigengeschwindigkeit von einem Fußgänger mit vernachlässigbarer Eigengeschwindigkeit unterschieden werden kann.

### Technische Lösung

Das erfindungsgemäße Verfahren zum Steuern eines Personenschutzsystems sieht dazu ein Erfassen eines Beschleunigungssignals vor, ein automatisches Bestimmen eines absoluten Minimalwertes und eines absoluten Maximalwertes des Beschleunigungssignals und Ausgeben eines Steuersignals zum Aktivieren des Personenschutzsystems in Abhängigkeit des Verhältnisses des absoluten Minimalwertes zu dem absoluten Maximalwert, insbesondere, wenn ein betragsmäßiges Verhältnis des Minimalwertes zu dem Maximalwert einen vorbestimmten Schwellwert überschreitet.

Bei einem Aufprall eines Objekts auf ein Fahrzeug zeichnen die Beschleunigungssensoren ein oszillatorisches Beschleunigungssignal auf. Dieses weist mehrere zeitlich aufeinander folgende Extrema auf und dämpft dann aus. Erfindungsgemäß wurde erkannt, dass das Verhältnis des absoluten Minimums zu dem absoluten Maximum der Oszillationen davon abhängt, ob das Objekt eine Eigengeschwindigkeit aufweist oder nicht. Bei einem Zusammenstoß mit einem Fußgänger ist dieses Verhältnis größer als bei einem Zusammenstoß mit dem leichten, aber schnellen Fußball.

Die Beschleunigungssignale sind vorzeichenbehaftet. Eine positive Beschleunigung bezeichnet dabei eine Beschleunigung in Fahrtrichtung, entsprechend eine negative Beschleunigung in eine der Fahrtrichtung entgegengesetzte Richtung. Das absolute Maxima ist demzufolge einer Beschleunigung in Fahrtrichtung und das absolute Minimum einer Beschleunigung in die Gegenrichtung zuzuordnen. Vor allem letztere geht mit dem Aufprall eines Fußgängers oder dem Aufprall eines anderen Objekts einher. Das Minimum folgt auf den Impakt des Objekts mit dem Fahrzeug. Das nachfolgende Maximum ist Folge der zur Oszillation angeregten Karosserie bzw. des Beschleunigungsaufnehmers.

Meist weist das zuerst auftretende Minimum den absoluten Minimalwert auf. Das auf erste Minimum folgende Maximum weist zumeist dann den absoluten Maximalwert auf, wenn der Beschleunigungssensor nahe dem Aufprallpunkt angeordnet ist. Falls der Beschleunigungssensor am Rand der Karosserie angeordnet ist und der Aufschlag in der Mitte der Karosserie erfolgt, ergibt sich ein vorauslaufendes Maximum vor dem ersten Minimum. Das vorauslaufende Maximum weist dann zumeist den absoluten Maximalwert auf.

Vorteilhafte Weiterbildungen und Ausgestaltungen sind in den abhängigen Patentansprüchen angegeben.

Gemäß einer Ausgestaltung wird das Beschleunigungssignal gefiltert, und die automatische Bestimmung des Maximalwertes und des Minimalwertes wird basierend auf dem gefilterten Beschleunigungssignal durchgeführt. Das Filtern kann durch Integrieren des Beschleunigungssignals oder durch eine Mittelung basierend auf einem gleitenden Fensterfilter durchgeführt werden. Hierdurch werden kurzzeitige Fluktuationen des Beschleunigungssignals unterdrückt.

Gemäß einer Ausgestaltung wird das absolute Minimalwertes bestimmt, nachdem der Absolutbetrag des Beschleunigungssignals oder des gefilterten Beschleunigungssignals einen ersten unteren Schwellwert überschreitet. Hierdurch kann eine Initialisierung erfolgen. Ein anfängliches Rauschen des Beschleunigungssignals wird dadurch effektiv unterdrückt. Das Bestimmen des absoluten Minimums und des Maximums kann beendet werden, wenn eine vorbestimmte Zeitspanne seit dem Beginn der Bestimmung vergangen ist. Die vorbestimmte Zeitspanne ergibt sich unter anderem aus durch den Zeitpunkt, an dem spätestens das Personenschutzsystem auszulösen ist, um eine Wirkung zu erzielen.

Gemäß einer Ausgestaltung wird das Beschleunigungssignal von einem Beschleunigungssensor oder einem Klopfsensor erfasst.

### Kurze Beschreibung der Zeichnungen

Die vorliegende Erfindung wird nachfolgend anhand bevorzugter Ausführungsbeispiele und Figuren näher erläutert. In den Figuren zeigen:
- Fig. 1: schematische Darstellung eines Ausführungsbeispiels der erfindungsgemäßen Vorrichtung,
- Fig. 2: Darstellung eines Beschleunigungssignals beim Aufprall eines Fußgängers,
- Fig. 3: Beschleunigungssignal beim Aufprall eines Fußballs und
- Fig. 4: Flussdiagramm eines Ausführungsbeispiels der vorliegenden Erfindung.

### Ausführungsform der Erfindung

In den Figuren bezeichnen gleiche Bezugszeichen gleiche oder ähnliche Komponenten.

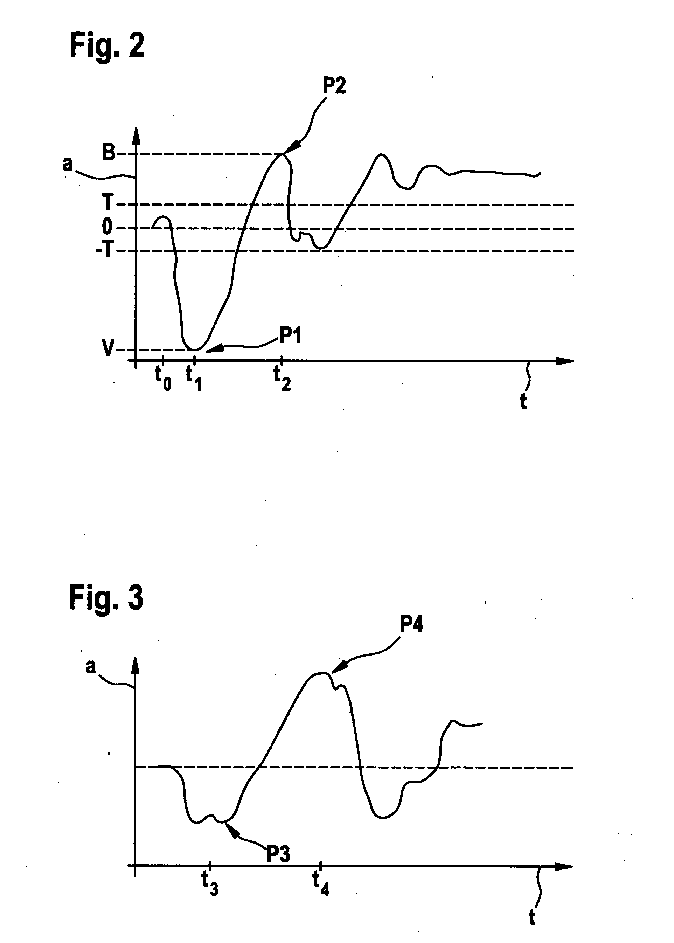

Ein Beschleunigungssensor 1 ist an der Front eines Kraftfahrzeuges 10 angebracht. Beim Zusammenstoß dieses Fahrzeuges mit einem Fußgänger ergibt sich ein Beschleunigungssignal a, das durch den Sensor 1 aufgezeichnet wird. Ein beispielhaftes Beschleunigungssignal a ist über die Zeit t in Fig. 2 dargestellt. Hierbei ist nur ein für die Erfindung relevanter zeitlicher Ausschnitt des Beschleunigungssignals a gezeigt. Das Signal weist zu einem ersten Zeitpunkt t1 ein Minimum P1 und zu einem darauf nachfolgenden Zeitpunkt t2 ein Maximum P2 auf. Das anfänglich zu einem Zeitpunkt t0 auftretende Maximum wird aufgrund seiner geringen Höhe und einem Unterschreiten eines vorgegebenen Schwellwertes T nicht betrachtet.

Von dem Minimum P1 wird der Extremalwert oder Spitzenwert V bestimmt. In gleicher Weise wird der Maximalwert B des Maximums von P2 bestimmt. Das betragsmäßige Verhältnis von V zu B ist bei dem Aufprall eines Fußgängers größer als ein vorbestimmter Schwellwert S. Erfindungsgemäß wird dies ausgenützt, indem nur dann ein Steuersignal 200 zum Auslösen eines Personenschutzsystems aktiviert wird, wenn das Verhältnis größer als der Schwellwert S ist.

Im Vergleich zu Fig. 2 ist in Fig. 3 das Beschleunigungssignal a über die Zeit t aufgetragen, wenn ein schneller Fußball mit dem gleichen Fahrzeug kollidiert.

Hierbei ergibt sich auch ein oszillatorisches Verhalten des Beschleunigungssignals a. Dem ersten Minimum P3 zum Zeitpunkt t3 nach dem Aufprall folgt wiederum ein Maximum P4 zu einem Zeitpunkt t4. Jedoch ist das Verhältnis der Signalwerte des Minimums P3 zu dem Signalwert des Maximums P4 weniger groß als zuvor in Zusammenhang mit einem Zusammenstoß mit einem Fußgänger erläutert. Das betragsmäßige Verhältnis wäre in diesem Fall geringer als der zuvor geeignet gewählte Schwellwert S.

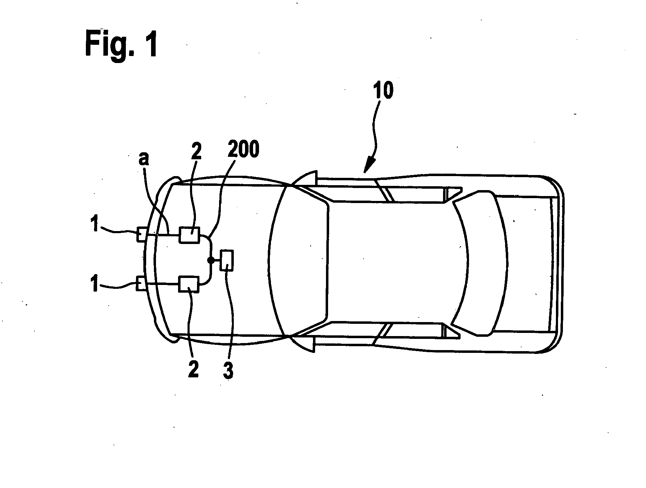

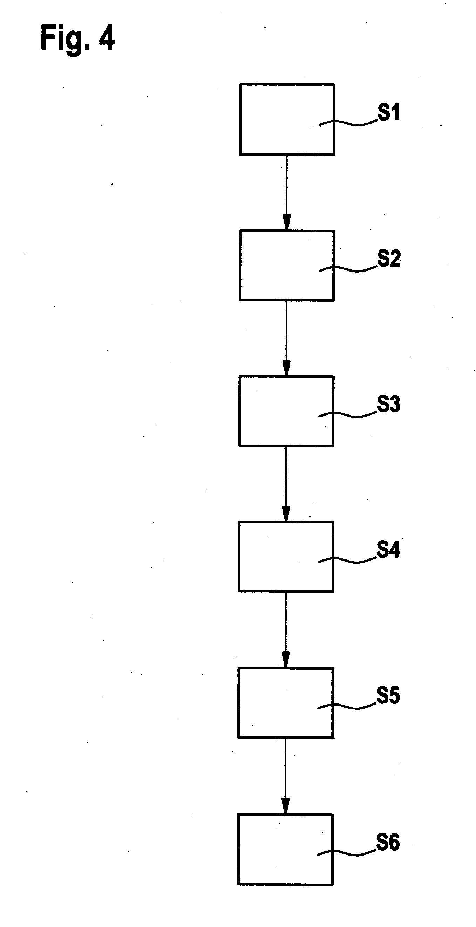

In Zusammenhang mit Fig. 4 und dem darin dargestellten Flussdiagramm wird eine Ausführungsform des erfindungsgemäßen Verfahrens erläutert. In einem ersten Schritt wird ein Beschleunigungssignal erfasst (S1). Überschreitet dieses einen minimalen Schwellwert, beginnt die Analyse des Beschleunigungssignals a (S2). Während der Analyse wird das Minimum P1, bestimmt. Vorzugsweise wird hierzu nicht unmittelbar das eingehende Beschleunigungssignal a verwendet, sondern die aufsummierten bzw. integrierten Werte des Beschleunigungssignals a. Ein Initialisieren des Integrals auf den Wert 0 kann mit dem Schritt S2 erfolgen. Das Integrieren gleicht kurzzeitige Schwankungen des Beschleunigungssignals a aus. Es hat somit den Effekt eines Filters und trägt zur Robustheit des Verfahrens bei. Von dem Minimum wird der Minimalwert V bestimmt (S3). Von dem danach auftretenden Maximum P2 in Fig. 1, wird ebenfalls der Extremwert B bestimmt (S4).

Nachfolgend wird der Betrag des Minimalwertes V zu dem Maximalwert B ins Verhältnis gesetzt und mit dem vorbestimmten Schwellwert S verglichen (S5). Vorteilhafterweise kann der dazu benötigte Rechenaufwand reduziert werden, indem der Maximalwert B mit der Schwelle S multipliziert wird und dieses Produkt mit dem Betrag des Minimalwertes V verglichen wird. Unterschreitet das Produkt den Minimalwert V, so liegt ein Zusammenstoß mit einem Fußgänger vor und ein Steuersignal 200 zum Auslösen eines Personenschutzsystems wird ausgegeben (S6). Vorzugsweise wird nicht nur ein Beschleunigungssignal a von einem einzigen Sensor 1 aufgenommen, sondern von einer Vielzahl von Sensoren 1. Die einzelnen Steuersignale werden gesammelt und gewichtet addiert. Überschreitet das gewichtete Steuersignal einen Schwellwert, erfolgt das eigentliche Auslösen des Personenschutzsystems. Alternativ können die einzelnen Beschleunigungssignale einer Mehrzahl von Beschleunigungssensoren aufsummiert werden. Nachfolgend wird das Minimum und Maximum des summierten Beschleunigungssignals bestimmt. Deren Verhältnis wird entsprechend den vorherigen Ausführungsbeispielen mit einem Schwellwert verglichen. Bei Überschreiten des Schwellwertes erfolgt ein Auslösen des Personenschutzsystems.

In Figur 2 und 3 entsprechen das absolute Minimum und das absolute Maximum jeweils dem ersten Minimum bzw. ersten Maximum. Es gibt jedoch auch Fälle, in denen vor allem das absolute Maximum in einer anderen Halboszillation auftritt, z.B. in dem zeitlich an zweiter Stelle auftretenden Maximum. Ferner kann das absolute Maximum auch vor dem absoluten Minimum auftreten. Die Reihenfolge von des absoluten Minimums und des absoluten Maximum ist von dem Aufprallort und der Lage des Beschleunigungssensors abhängig. Die in Figur 2 und 3 gezeigten Kurven entsprechen einem Aufprall nahe dem Sensor. Stößt das Objekt jedoch entfernt von dem Sensor mit der Karosserie zusammen, kann in Folge einer Hebelwirkung zuerst eine positive Beschleunigung auftreten. Diese weist dann häufig den größten auftretenden Maximalwert auf.

Die einzelnen Steuersignale können alle gleich gewichtet oder verschieden stark gewichtet sein. Für letzteren Fall kann der Abstand der Sensoren zu dem Aufprallort bestimmt werden. Ein Steuersignal vorteilhafter Weise wird umso stärker gewichtet, je näher der Aufprallort zu dem Sensor ist.

Da die Karosserie und die Sensoren temperaturabhängig sind, erweist es sich als vorteilhaft, die Beschleunigungssignale temperaturkompensiert zu erfassen oder den Schwellwert temperaturabhängig festzulegen.

Ferner können die Steuersignale auch mit anderen Steuersignalen kombiniert werden, die durch eine Bestimmung der Masse und/oder der Steifigkeit des aufprallenden Objektes charakterisiert sind.

Die Schwelle kann in Abhängigkeit der Fahrzeuggeschwindigkeit angepasst werden.

Obwohl die vorliegende Erfindung anhand eines bevorzugten Ausführungsbeispiels beschrieben wurde, ist sie nicht darauf beschränkt. Insbesondere können anstelle von Beschleunigungssensoren auch Klopfsensoren oder ähnliche Sensoren verwendet werden.

## Patentansprüche

1. Verfahren zum Steuern eines Personenschutzsystems von einem Kraftfahrzeug mit den nachfolgenden Schritten
Erfassen eines Beschleunigungssignals (a); **gekennzeichnet durch** folgende Schritte:
automatisches Bestimmen des absoluten Minimalwertes (V) und des absoluten Maximalwertes (B) des Beschleunigungssignals (a) oder des aufsummierten oder des integrierten Beschleunigungssignals; und
Ausgeben eines Steuersignals zum Aktivieren des Personenschutzsystems in Abhängigkeit des Verhältnisses des Minimalwertes (V) zum Maximalwert (B).

2. Verfahren nach Anspruch 1, **dadurch gekennzeichnet, dass** das Ausgeben eines Steuersignals zum Aktivieren des Personenschutzsystems erfolgt, wenn das betragsmäßige Verhältnis des Minimalwertes (V) zum Maximalwert (B) einen vorbestimmten Schwellwert überschreitet.

3. Verfahren nach einem der vorhergehenden Ansprüche, **dadurch gekennzeichnet, dass** das Beschleunigungssignal (a) gefiltert wird und die automatische Bestimmung des Minimalwertes (V) und des Maximalwertes (B) auf dem gefilterten Beschleunigungssignal durchgeführt wird.

4. Verfahren nach Anspruch 4, **dadurch gekennzeichnet, dass** das Filtern ein Integrieren des Beschleunigungssignals (a) oder eine Mittelung basierend auf einem gleitenden Fensterfilter beinhaltet.

5. Verfahren nach einem der vorhergehenden Ansprüche, **dadurch gekennzeichnet, dass** der Minimalwert und der Maximalwert bestimmt wird, nachdem der Absolutbetrag des Beschleunigungssignals (a) oder des gefilterten Beschleunigungssignals einen unteren Schwellwert (T) überschreitet.

6. Verfahren nach einem der vorhergehenden Ansprüche, **dadurch gekennzeichnet, dass** über eine Mehrzahl von Beschleunigungssignalen (a) mehrerer Sensoren (1) oder Steuersignale gemittelt wird.

7. Verfahren nach Anspruch 6, **dadurch gekennzeichnet, dass** die Beschleunigungssignale (a) oder Steuersignale entsprechend dem Abstand eines Aufprallpunktes eines Objekts zu einem der Sensoren (1) aus einer Mehrzahl der Sensoren (1) das jeweilige Beschleunigungssignal (a) gewichtet werden.

8. Verfahren nach einem der vorhergehenden Ansprüche, **dadurch gekennzeichnet, dass** die Beschleunigungssignale temperaturkompensiert erfasst werden oder die Steuersignale temperaturkompensiert ausgegeben werden.

9. Vorrichtung zum Steuern einer Personenschutzvorrichtung von einem Kraftfahrzeug mit
wenigstens einem Sensor (1) zur Erfassung eines Beschleunigungssignals (a) beim Aufprall eines Objekts, **gekennzeichnet durch** eine Datenverarbeitungseinrichtung (2) zum automatisches Bestimmen des absoluten Minimalwertes (V) und des absoluten Maximalwertes (B) des Beschleunigungssignals oder des aufsummierten oder des integrierten Beschleunigungssignals und
eine Ausgabeschnittstelle zum Ausgeben eines Steuersignals zum Aktivieren des Personenschutzsystems in Abhängigkeit des Verhältnisses des Minimalwertes (V) zu dem Maximalwert (B).

## Claims

1. Method for controlling a personal protection system of a motor vehicle having the following steps:
acquisition of an acceleration signal (a); **characterized by** the following steps:
automatic determination of the absolute minimum value (V) and of the absolute maximum value (B) of the acceleration signal (a) or of the summed or integrated acceleration signal; and
outputting of a control signal for activating the personal protection system as a function of the ratio of the minimum value (V) to the maximum value (B).

2. Method according to Claim 1, **characterized in that** a control signal is output in order to activate the personal protection system if the ratio of the minimum value (V) to the maximum value (B) exceeds a predetermined threshold value in terms of absolute value.

3. Method according to one of the preceding claims, **characterized in that** the acceleration signal (a) is filtered and the automatic determination of the minimum value (V) and of the maximum value (B) is carried out on the filtered acceleration signal.

4. Method according to Claim 4, **characterized in that** the filtering includes integration of the acceleration signal (a) or averaging on the basis of a sliding window filter.

5. Method according to one of the preceding claims, **characterized in that** the minimum value and the maximum value are determined after the absolute value of the acceleration signal (a) or of the filtered acceleration signal exceeds a lower threshold value (T).

6. Method according to one of the preceding claims, **characterized in that** averaging is carried out over a plurality of acceleration signals (a) from a plurality of sensors (1) or over control signals.

7. Method according to Claim 6, **characterized in that** the acceleration signals (a) or control signals are weighted in accordance with the distance of an impact point of an object from one of the sensors (1) from a plurality of sensors (1).

8. Method according to one of the preceding claims, **characterized in that** the acceleration signals are acquired with compensation for temperature, or the control signals are output with compensation for temperature.

9. Device for controlling a personal protection device of a motor vehicle having
at least one sensor (1) for acquiring an acceleration signal (a) when an object impacts, **characterized by** a data processing device (2) for automatically determining the absolute minimum value (V) and the absolute maximum value (B) of the acceleration signal or of the summed or of the integrated acceleration signal, and
an output interface for outputting a control signal for activating the personal protection system as a function of the ratio of the minimum value (V) to the maximum value (B).

## Revendications

1. Procédé de commande d'un système de protection des personnes dans un véhicule automobile et comprenant les étapes suivantes :
- saisie d'un signal d'accélération (a),
**caractérisé en ce qu'**
on exécute les étapes suivantes :
- détermination automatique de la valeur absolue minimale (V) et de la valeur absolue maximale (B) du signal d'accélération (a) ou de la somme de l'intégrale du signal d'accélération, et
- émission d'un signal de commande pour activer le système de protection des personnes en fonction du rapport entre la valeur minimale (V) et la valeur maximale (B).

2. Procédé selon la revendication 1,
**caractérisé par**
l'émission d'un signal de commande pour activer le système de protection de personnes, si le rapport des valeurs absolues entre la valeur minimale (V) et la valeur maximale (B) dépasse un seuil prédéfini.

3. Procédé selon l'une des revendications précédentes,
**caractérisé en ce qu'**
on filtre le signal d'accélération (a) et on détermine automatiquement la valeur minimale (V) et la valeur maximale (B) à partir du signal d'accélération filtré.

4. Procédé selon la revendication 3,
**caractérisé en ce qu'**
on effectue le filtrage par intégration du signal d'accélération (a) ou en faisant la moyenne s'appuyant sur un filtre à fenêtre glissante.

5. Procédé selon l'une des revendications précédentes,
**caractérisé en ce qu'**
on détermine la valeur minimale et la valeur maximale dès que la valeur absolue du signal d'accélération (a) ou du signal d'accélération filtré dépasse une valeur de seuil inférieure (T).

6. Procédé selon l'une des revendications précédentes,
**caractérisé en ce qu'**
on fait la moyenne d'un ensemble de signaux d'accélération (a) de plusieurs capteurs (1) ou de signaux de commande.

7. Procédé selon la revendication 6,
**caractérisé en ce qu'**
on pondère les signaux d'accélération (a) ou les signaux de commande en fonction de la distance du point d'impact d'un objet par rapport à l'un des capteurs (1) d'un ensemble de capteurs (1) pour le signal d'accélération respectif (a).

8. Procédé selon l'une des revendications précédentes,
**caractérisé en ce qu'**
on saisit de façon compensée en température, les signaux d'accélération ou on émet les signaux de commande avec compensation en température.

9. Dispositif de commande d'un dispositif de protection des personnes d'un véhicule automobile comprenant :
- au moins un capteur (1) pour saisir un signal d'accélération (a) lors d'un choc avec un objet,
**caractérisé par**
une installation de traitement de données (2) pour déterminer automatiquement la valeur absolue minimale (V) et la valeur absolue maximale (B) du signal d'accélération ou de la somme ou de l'intégrale du signal d'accélération, et
une interface pour émettre un signal de commande pour activer le système de protection des personnes en fonction du rapport entre la valeur minimale (V) et la valeur maximale (B).
